# EUROPEAN PATENT SPECIFICATION

(11) **EP 4 343 945 B1**
(45) Date of publication and mention of the grant of the patent: **30.09.2026**
(21) Application number: 23737359.2
(22) Date of filing: 04.01.2023
(51) Int. Cl.: H01M 50/342, H01M 50/24, H01M 50/264, H01M 50/35, H01M 50/183, H01M 50/207, H01M 50/213, H01M 50/291, H01M 50/367

(54) **BATTERY MODULE FOR PREVENTING CHAIN IGNITION AND MANUFACTURING METHOD THEREOF**
BATTERIEMODUL ZUR VERHINDERUNG VON KETTENZÜNDUNG UND VERFAHREN ZUR HERSTELLUNG DAVON
MODULE DE BATTERIE POUR EMPÊCHER UN ALLUMAGE DE CHAÎNE ET SON PROCÉDÉ DE FABRICATION

(30) Priority: 04.01.2022 KR 20220000723
(43) Date of publication of application: 27.03.2024
(60) Divisional application: 26199624.3
(73) Proprietor: LG Energy Solution, Ltd., Seoul 07335 (KR)
(72) Inventor: KEUM, Jong Yoon, Daejeon 34122 (KR); CHOI, Bum, Daejeon 34122 (KR); AHN, Soo Jun, Daejeon 34122 (KR); CHUNG, Jae Heon, Daejeon 34122 (KR); JUNG, Min Yong, Daejeon 34122 (KR)
(74) Representative: Plasseraud IP
(86) International application number: PCT/KR2023/000120
(87) International publication number: WO 2023/132611

(56) References cited:
- JP-A- 2012 015 121
- KR-A- 20110 060 960
- KR-A- 20190 086 853
- KR-A- 20200 136 745
- KR-A- 20210 049 016
- KR-B1- 102 227 007
- KR-B1- 102 227 007
- US-A1- 2017 373 287

## Description

### [Technical Field]

The present invention relates to a battery module for preventing chain ignition and a manufacturing method thereof, and more particularly, relates to a battery module for preventing chain ignition capable of smoothly ejecting flames generated when a battery cell is ignited inside and preventing the flames from spreading to adjacent battery cells, and a manufacturing method thereof.

### [Background Art]

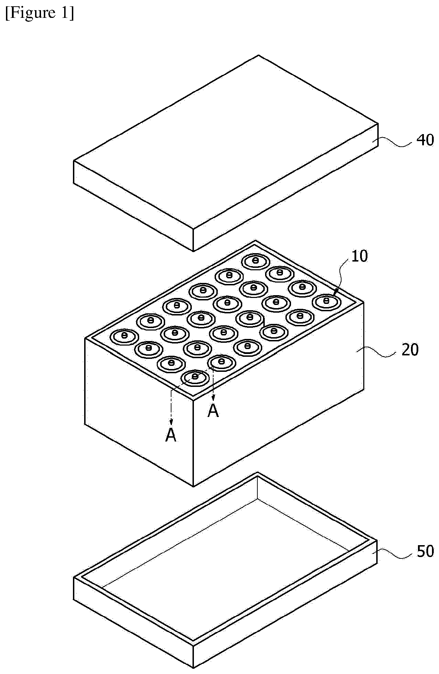

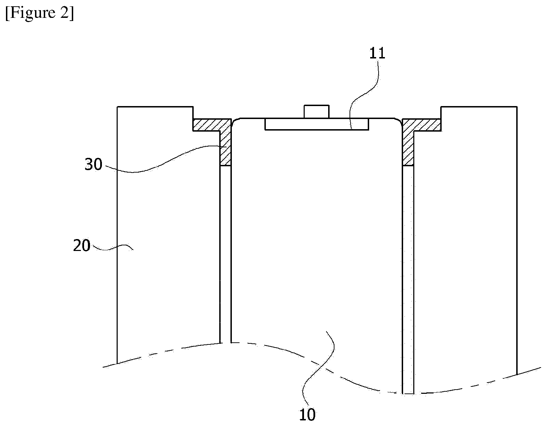

Figures 1 and 2 are diagrams for explaining a battery module according to a prior art.

Referring to Figure 1, a conventional battery module comprises at least one battery cell (10), a cell frame (20), an upper cover (40) and a lower cover (50).

The battery cell (10) comprises positive and negative current collectors, separators, an active material, an electrolytes, and the like, which can be repeatedly charged and discharged by electrochemical reactions between the components. Since the battery module is manufactured in the form that these battery cells (10) are densely packed in a narrow space, it is important to easily release heat generated from each battery cell (10).

The process of charging or discharging the battery cell (10) is performed by an electrochemical reaction, so that if the heat of the battery module generated during the charging and discharging process is not effectively removed, heat accumulation occurs, and as a result, the deterioration of the battery module is accelerated, where ignition or explosion may optionally occur.

At least one battery cell (10) is spaced apart from the cell frame (20). At least one battery cell (10) is fixed to the cell frame (20). Referring to Figure 2, each battery cell (10) is fixed to the cell frame (20) by an adhesive (30) applied to the side of the battery cell (10).

The cell frame (20) has, as a structure with opened top and bottom, a structure to support battery cells (10) so that the vent part (11) of at least one battery cell (10) is mutually exposed.

An upper cover (40) and a lower cover (50) are installed on the cell frame (20). The upper cover (40) is installed on the top of the cell frame (20) to cover the opened top of the cell frame (20). The lower cover (50) is installed on the bottom of the cell frame (20) to cover the opened bottom of the cell frame (20).

In the conventional battery module, when any one of the battery cells (10) is ignited inside, there has been a problem in which chain ignition occurs, while the vent part (11) is opened in the battery cell (10) by the flames generated in the ignited battery cell (10), and simultaneously the flames of the ignited battery cell (10) are transferred to the surrounding battery cells (10).

Document US 2017/373287 A1 relates to a battery pack including multiple battery modules each having multiple battery cells. Document JP 2012 015121 A relates to a power supply device that can improve safety in a state where a safety valve of the battery is opened. Document KR 102 227 007 B1 relates to a structure and shape of a secondary battery cell assembly in consideration of preventing cascaded ignition, and more particularly, a plurality of batteries are grouped in a package form to form an insulating structure between secondary batteries, and one battery has an abnormality.

### [Disclosure]

### [Technical Problem]

The present invention is intended to provide a battery module for preventing chain ignition comprising a cell frame for blocking vent parts of battery cells from being exposed to the outside, and a manufacturing method thereof.

Also, the present invention is intended to provide a battery module for preventing chain ignition in which upon inside ignition of a battery cell, as only the cell frame portion covering the ignited battery cell is individually damaged, the flames generated upon the inside ignition of the battery cell can be smoothly ejected through the damaged portion, and a manufacturing method thereof.

In addition, the present invention is intended to provide a battery module for preventing chain ignition capable of preventing flames from spreading to adjacent battery cells while only specific parts of a cell frame are individually damaged, and a manufacturing method thereof.

### [Technical Solution]

The invention is defined in the appended set of claims.

A battery module for preventing chain ignition according to one example of the present invention comprises a plurality of battery cells having vent parts, a cell frame including a cell seating part having a plurality of seating grooves provided so that the vent parts of the plurality of battery cells are each inserted, and a first adhesive layer disposed between the vent parts of the battery cells and the seating grooves, and for bonding the battery cells to the cell seating part.

Also, the cell seating part is provided so that two adjacent seating grooves are located apart from each other.

In addition, each seating groove is provided to be recessed on one inside surface of the cell frame facing the vent parts.

Furthermore, the seating groove has a seating groove bottom surface positioned to face the vent part and a seating groove side surface connecting the seating groove bottom surface and one inside surface of the cell frame.

Also, the first adhesive layer may be positioned in each of a space between the seating groove bottom surface and the vent part and a space between the seating groove side surface and the battery cell.

In addition, the first adhesive layer may be formed by applying an adhesive material to one inside surface of the cell frame including the seating groove bottom surface and the seating groove side surface.

Furthermore, the first adhesive layer may be provided to surround each of the plurality of seating grooves.

Also, the cell seating part has a plurality of vent pattern grooves each formed on one outside surface in an opposite direction to one inside surface of the cell frame. Furthermore, each of the vent pattern grooves is positioned so that a partial region overlaps with the seating groove located in the opposite direction.

In addition, each vent pattern groove may be arranged so that its center is positioned coaxially with the center of the seating groove located in the opposite direction.

Also, each vent pattern groove may have a diameter smaller than the diameter of the seating groove.

**In** addition, the cell seating part may have a collision wall part positioned between the seating groove and the vent pattern groove.

Furthermore, the collision wall part may comprise a region with the smallest thickness in the cell frame.

Also, the collision wall part may be provided to be damaged when the battery cell inserted into the seating groove is ignited.

**In** addition, the depth of the vent pattern groove may be smaller than the depth of the seating groove.

Furthermore, the cell frame may be injection-molded such that the plurality of seating grooves is provided on one inside surface of the cell frame and the plurality of vent pattern grooves is provided on one outside surface of the cell frame.

Also, the cell seating part may be provided so that adjacent seating grooves are partitioned from each other, and provided so that seating grooves surrounding battery cells in which inside ignition has occurred are individually damaged.

In addition, the battery module may comprise a cell support having a plurality of insertion holes into which each battery cell is inserted, and mounted on the cell frame.

Furthermore, the battery module may comprise a cover part surrounding the cell support part and mounted on the cell frame to accommodate the plurality of battery cells.

In addition, the battery module may comprise a second adhesive layer for bonding the plurality of battery cells to the cover part.

### [Effects of Invention]

As described above, the battery module for preventing chain ignition related to at least one example of the present invention, and the manufacturing method thereof have the following effects.

Through the cell frame provided to individually surround the vent parts of the plurality of battery cells, it is possible to block the vent parts of the battery cells from being exposed to the outside.

Also, upon inside ignition of a battery cell, as only a specific portion of the cell frame covering the ignited battery cell is individually damaged, the flames generated upon the inside ignition of the battery cell can be smoothly ejected through the damaged portion.

In addition, while only specific portions of the cell frame are individually damaged, it is possible to prevent flames from spreading to adjacent battery cells, and as a result, it is possible to prevent chain ignition.

### [Brief Description of Drawings]

Figures 1 and 2 are diagrams for explaining a battery module according to a prior art.
Figure 3 schematically illustrates an exploded perspective diagram of a battery module for preventing chain ignition according to one example of the present invention.
Figure 4 illustrates, in one example of the present invention, a cell frame provided with at least one vent pattern groove, viewed from the outside of the cell frame.
Figure 5 schematically illustrates a cross-sectional diagram of a cell frame according to one example of the present invention.
Figure 6 schematically illustrates, in one example of the present invention, a combined cross-section of a cell seating part, an adhesive layer, and a battery cell in a state where the battery cell is bonded to the cell seating part.
Figure 7 is a diagram for explaining, in a battery module for preventing chain ignition according to one example of the present invention, that upon inside ignition of any one of battery cells, flames are ejected to the outside of a cell frame, while a collision wall part of a cell seating part is damaged.

### [Mode for Invention]

Hereinafter, a battery module for preventing chain ignition according to one example of the present invention, and a manufacturing method thereof will be described with reference to the accompanying drawings.

The term such as first or second is used only for the purpose of distinguishing one component from another, and the accompanying drawings in this application are shown to be enlarged or reduced for convenience of description.

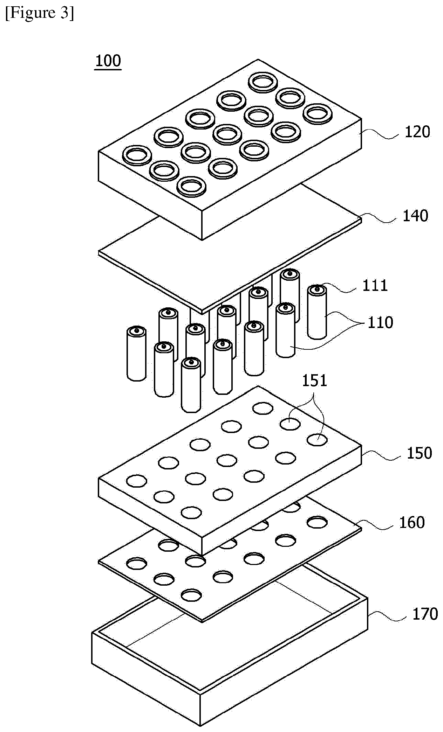

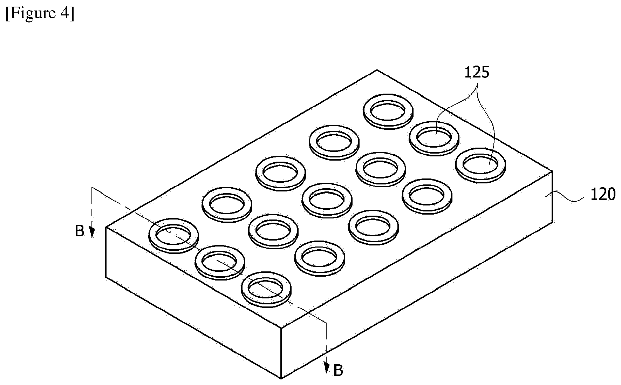

Figure 3 schematically illustrates an exploded perspective diagram of a battery module (100) for preventing chain ignition according to one example of the present invention, and Figure 4 illustrates, in one example of the present invention, a cell frame (120) provided with at least one vent pattern groove, viewed from the outside of the cell frame (120).

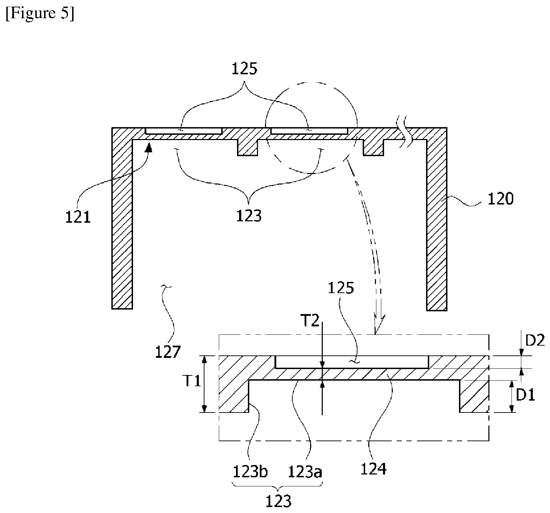

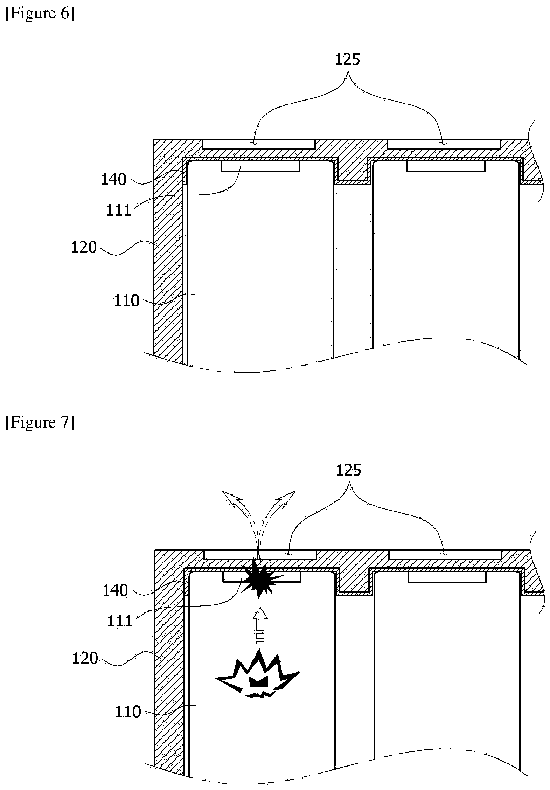

Also, Figure 5 schematically illustrates a cross-sectional diagram of a cell frame according to one example of the present invention, and Figure 6 schematically illustrates, in one example of the present invention, a combined cross-section of a cell seating part, a first adhesive layer, and a battery cell in a state where the battery cell is bonded to the cell seating part.

In addition, Figure 7 is a diagram for explaining, in a battery module for preventing chain ignition according to one example of the present invention, that upon inside ignition of any one of battery cells, flames are ejected to the outside of a cell frame, while a collision wall part of a cell seating part is damaged.

Referring to Figures 3, 4, and 5, the battery module (100) for preventing chain ignition comprises a plurality of battery cells (110) having vent parts (111), a cell frame (120) including a cell seating part (121) having a plurality of seating grooves (123) provided so that the vent parts (111) of the plurality of battery cells (110) are each inserted, and a first adhesive layer (140) disposed between the vent parts (111) of the battery cells (110) and the seating grooves (123), and for bonding the battery cells (110) to the cell seating part (121).

Referring to Figure 3, a vent part (111) is provided at one end of a cylindrical battery cell (110). The vent part (111) is formed along one end edge of the battery cell (110). For example, the vent part (111) may be formed at the central position of one end of the battery cell (110).

The vent part (111) is for relieving internal pressure of the battery cell (110). The vent part (111) is formed at one end of the battery cell (110) to have a relatively weak strength, and is provided to be broken upon inside ignition of the battery cell (110).

As such, when the internal pressure of the battery cell (110) rises above a predetermined threshold pressure (e.g., the rupturing pressure of the vent part), the vent part (111) is for relieving the internal pressure of the battery cell (110), while the vent part (111) is broken from the battery cell (110).

The present invention can prevent flames from spreading to adjacent battery cells (110) upon inside ignition of a battery cell (110) while only a specific portion of the cell frame (120) covering the ignited battery cell (110) upon the inside ignition of the battery cell (110) is damaged.

Referring to Figure 3, the battery module (100) for preventing chain ignition according to one example of the present invention comprises a plurality of battery cells (110), a cell frame (120), a cell seating part (121), a first adhesive layer (140), a cell support part (150), and a cover part (170).

The battery cell (110) according to this example may be a cylindrical battery cell (110), where a vent part (111) is provided at one end.

The cell frame (120) has a structure that is open toward the vent parts of the plurality of battery cells. The plurality of battery cells (110) is inserted into the cell frame (120). A cell seating part (121) is provided in the cell frame (120). In this example, the cell seating part (121) refers to a region of the cell frame (120) surrounding the vent parts (111) of the battery cells (110).

Referring to Figures 4 and 5, the cell seating part (121) is provided so that the respective seating grooves (123) are partitioned from each other. The cell seating part (121) is provided such that two adjacent seating grooves (123) are located apart from each other. In addition, each seating groove (123) is provided to be recessed on one inside surface of the cell frame (120) facing the vent parts (111).

Also, the cell seating part (121) may be provided so that adjacent seating grooves (123) are partitioned from each other, and provided so that seating grooves surrounding battery cells (110) in which inside ignition has occurred are individually damaged. That is, the cell seating part (121) may be provided so that upon the inside ignition of the battery cells (110), the seating grooves (123) in contact with the vent parts (111) of the battery cells are individually damaged.

In addition, the cell seating part (121) may be provided to support the end of each battery cell (110) where the vent part is located while surrounding the vent part (111) of each battery cell.

Furthermore, the cell seating part (121) may have a plurality of seating grooves (123) and a plurality of vent pattern grooves (125). Specifically, the cell seating part (121) may have a plurality of vent pattern grooves (125) each formed on one outside surface in an opposite direction to one inside surface of the cell frame (120). In addition, each of the vent pattern grooves (125) may be positioned so that a partial region overlaps with the seating groove (123) located in the opposite direction.

Also, the plurality of seating grooves (123) may be arranged to correspond to an arrangement pattern of the plurality of battery cells (110). In addition, the plurality of vent pattern grooves (125) may be arranged to correspond to the arrangement pattern of the plurality of vent parts (111). For example, the number of seating grooves and the number of vent pattern grooves may be provided to be the same, and as in Figure 4, when viewed from the top of the cell frame (120), the vent pattern grooves on one outside surface of the cell frame may be matched with the seating grooves on one inside surface of the cell frame in a ratio of 1:1.

The respective seating grooves (123) are provided to be stepped on one inside surface of the cell frame (120). The seating groove (123) has a shape corresponding to the shape of one end of the battery cell (110) where the vent part is located, which is provided to allow the battery cells (110) to be inserted.

Referring to the enlarged view of Figure 5, the seating groove (123) has a seating groove bottom surface (123a) and a seating groove side surface (123b). That is, the seating groove (123) has a seating groove bottom surface (123a) positioned to face the vent part (111) and a seating groove side surface (123b) connecting the seating groove bottom surface (123a) and one inside surface of the cell frame. The seating groove side surface (123b) is provided to surround the end side surface of the battery cell (110).

With this structure, when the battery cell (110) is inserted into the cell frame (120), the cell seating part (121) is disposed so that the seating groove bottom surface (123a) faces the vent part (111), and the seating groove side surface (123b) surrounds the end side surface of the battery cell (110). With this structure, the respective vent parts (111) are located inside the seating groove (123) to be individually partitioned.

Meanwhile, the vent pattern grooves (125) are each arranged to correspond to one seating groove (123) on one outside surface of the cell frame (120).

Each of the vent pattern grooves (125) may be arranged such that its center is positioned coaxially with the center of the seating groove (123) located in the opposite direction. In addition, each vent pattern groove (125) may have a diameter smaller than the diameter of the seating groove (123).

Also, it is provided that the depth (D₂) of the vent pattern groove (125) is smaller than the depth (D₁) of the seating groove (123) and the diameter is smaller than the diameter of the seating groove (123).

In this document, one outside surface of the cell frame (120) is the opposite side of one inside surface of the cell frame (120). That is, based on the thickness direction of the cell frame (120), the plurality of seating grooves (123) is provided on the inside, and the plurality of vent pattern grooves (125) is provided on the outside.

In addition, the cell seating part (120) may have a collision wall part (124) located between the seating groove and the vent pattern groove.

In this document, for convenience of explanation, one region of the cell frame (120) between the seating groove (123) and the vent pattern groove (125) is referred to as the "collision wall part (124)".

Furthermore, the collision wall part (124) may comprise a region having the smallest thickness in the cell frame (120). With this structure, the collision wall part (124) may be provided to be damaged prior to other regions of the cell frame when the battery cell inserted into the seating groove (123) is ignited.

Here, the collision wall part (124) is provided such that it is recessed into the inside surface of the cell frame (120) by the depth of the seating groove (123), and recessed into the outside surface of the cell frame (120) by the depth of the vent pattern groove (125).

In addition, the collision wall part (124) may have a thickness (T₂) obtained by subtracting the depth of the vent pattern groove (125) and the depth of the seating groove (123) from the reference thickness (T₁), which is the thickness of the cell frame (120).

As the vent pattern groove (125) is formed at a position overlapping each seating groove (123), the thickness of the collision wall part (124) can be reduced.

Accordingly, in the present invention, the thickness of the collision wall part (124), which is a portion in contact with the vent part (111), is reduced, and as a result, upon the inside ignition of the battery cell (110), the collision wall part (124) may be damaged while the vent part (111) is broken in the battery cell (110). In addition, flames ejected from the ignited battery cell (110) may be ejected through the damaged collision wall part, and the flames may be prevented from being transferred to the surrounding battery cells (110).

The cell frame (120) having such a structure may be injection-molded so that the cell seating part (121) is provided. In addition, the cell frame (120) may be injection-molded such that the plurality of seating grooves (123) is provided on one inside surface of the cell frame and the plurality of vent pattern grooves (125) is provided on one outside surface of the cell frame.

In this example, each battery cell (110) may be bonded to each seating groove (123) by a first adhesive layer (140). The first adhesive layer (140) bonds, in one inside surface of the cell frame (120), one end of the battery cell (110) to each seating groove (123).

Also, the first adhesive layer (140) may be positioned in each of a space between the seating groove bottom surface (123a) and the vent part (111) and a space between the seating groove side surface (123b) and the battery cell. In addition, the first adhesive layer (140) may be formed by applying an adhesive material to one inside surface of the cell frame including the seating groove bottom surface and the seating groove side surface. Furthermore, the first adhesive layer (140) may be provided to surround each of the plurality of seating grooves (123).

Referring to Figure 6, the first adhesive layer (140) may be formed by applying an adhesive material to one inside surface of the cell frame (120) including the seating groove bottom surface (123a) and the seating groove side surface (123b), and the first adhesive layer (140) may bond each battery cell (110) to each seating groove (123).

Alternatively, the first adhesive layer (140) is in a form such as a double-sided tape, wherein one side may be bonded to one inside surface of the cell frame (120) and the end of the battery cell (110) where the vent part is located may be bonded to the other side.

If the first adhesive layer (140) is formed of a material capable of bonding the battery cell (110) to the seating groove (123) in a laterally supportable manner, various types of materials may be used, and the material is not limited to a specific material.

Also, the battery module (100) may comprise a cell support part (150) having a plurality of insertion holes (151), into which each battery cell (110) is inserted, and mounted on the cell frame.

In addition, the cell support part (150) is inserted into the inner space (127) of the cell frame (120) and mounted on the cell frame (120). The cell support part (150) may support the plurality of battery cells (110) to be located apart at regular intervals.

Furthermore, the cell support part (150) has a plurality of insertion holes (151) provided in an arrangement pattern of the plurality of battery cells. Here, the insertion hole (151) laterally supports the battery cell while surrounding the side surface of the battery cell.

Also, the battery module (100) may comprise a cover part (170) surrounding the cell support part (150), and mounted on the cell frame (120) to accommodate the plurality of battery cells.

The cover part (170) is mounted on the cell frame (120) to face the cell seating part (121). The cover part (170) surrounds the inner space (127) of the cell frame (120) so that the plurality of battery cells (110) is not exposed to the outside.

In addition, the battery module (100) may comprise a second adhesive layer (160) for bonding the plurality of battery cells (110) to the cover part (170). The second adhesive layer (160) bonds the ends of the plurality of battery cells (110) to the inner surface of the cover part (170).

Here, the second adhesive layer (160) is positioned between the cover part (170) and the end of the battery cell (110) where the vent part (111) is not provided. The second adhesive layer (160) may be made of the same adhesive or adhesive sheet as the adhesive layer (140) as described above.

Referring to Figure 7, the present invention may slim the thickness of the collision wall part (124) of the cell frame (120), which is a portion covering the vent part (111) of each battery cell. In this structure, while the vent part (111) broken in the battery cell (110) upon the inside ignition of the battery cell (110) damages the collision wall part (124), the flames generated from the battery cell (110) may be smoothly discharged to the outside through the damaged collision wall part (124).

### [Explanation of Reference Numerals]

100: battery module for preventing chain ignition
110: battery cell
111: vent part
120: cell frame
121: cell seating part
123: seating groove
124: collision wall part
125: vent pattern groove
140: adhesive layer
150: cell support part
160: second adhesive layer
170: cover part

## Claims

1. A battery module (100) comprising:
a plurality of battery cells (110) having vent parts (111);
a cell frame (120) including a cell seating part (121) having a plurality of seating grooves (123) provided so that the vent parts (111) of the plurality of battery cells are each inserted; and
a first adhesive layer (140) disposed between the vent parts (111) of the battery cells (110) and the seating grooves (123), and for bonding the battery cells (110) to the cell seating part (121), wherein
the cell seating part (121) is provided so that two adjacent seating grooves (123) are located apart from each other;
wherein each seating groove (123) is provided to be recessed in one inside surface of the cell frame (120) facing the vent part (111);
wherein the cell seating part (121) has a plurality of vent pattern grooves (125) each formed on one outside surface in an opposite direction to one inside surface of the cell frame (120), and
each of the vent pattern grooves (125) is positioned so that a partial region overlaps with the seating groove (123) located in the opposite direction.

2. The battery module (100) according to claim 1, wherein
the seating groove (123) has a seating groove bottom surface (123a) positioned to face the vent part (111) and a seating groove side surface (123b) connecting the seating groove bottom surface (123a) and one inside surface of the cell frame (120), and
the first adhesive layer (140) is positioned in each of a space between the seating groove bottom surface (123a) and the vent part (111) and a space between the seating groove side surface (123b) and the battery cell (110).

3. The battery module (100) according to claim 2, wherein
the first adhesive layer (140) is formed by applying an adhesive material to one inside surface of the cell frame (120) including the seating groove bottom surface (123a) and the seating groove side surface (123b).

4. The battery module (100) according to claim 2, wherein
the first adhesive layer (140) is provided to surround each of the plurality of seating grooves (123).

5. The battery module (100) according to claim 1, wherein
each vent pattern groove (125) is arranged so that its center is positioned coaxially with the center of the seating groove (123) located in the opposite direction, and
each vent pattern groove (125) has a diameter smaller than the diameter of the seating groove (123).

6. The battery module (100) according to claim 4, wherein
the cell seating part (121) has a collision wall part (124) positioned between the seating groove (123) and the vent pattern groove (125), and
the collision wall part (124) comprises a region with the smallest thickness in the cell frame (120).

7. The battery module (100) according to claim 4, wherein
the collision wall part (124) is provided to be damaged when the battery cell (110) inserted into the seating groove (123) is ignited.

8. The battery module (100) according to claim 4, wherein
the depth of the vent pattern groove (125) is smaller than the depth of the seating groove (123).

9. The battery module (100) according to claim 4, wherein
the cell frame (120) is injection-molded such that the plurality of seating grooves (123) is provided on one inside surface of the cell frame (120) and the plurality of vent pattern grooves (125) is provided on one outside surface of the cell frame (120).

10. The battery module (100) according to claim 1, wherein
the cell seating part (121) is provided so that adjacent seating grooves (123) are partitioned from each other, and provided so that seating grooves (123) surrounding battery cells (110) in which inside ignition has occurred are individually damaged.

11. The battery module (100) according to claim 1, further comprising
a cell support part (150) having a plurality of insertion holes (151) into which each battery cell (110) is inserted, and mounted on the cell frame (120).

12. The battery module (100) according to claim 11, further comprising
a cover part (170) surrounding the cell support part (150) and mounted on the cell frame (120) to accommodate the plurality of battery cells (110).

13. The battery module (100) according to claim 12, further comprising
a second adhesive layer (160) for bonding the plurality of battery cells (110) to the cover part (170).

## Patentansprüche

1. Batteriemodul (100), umfassend:
eine Vielzahl von Batteriezellen (110), die Entlüftungsteile (111) aufweisen;
einen Zellenrahmen (120), der einen Zellensitzteil (121) mit einer Vielzahl von Sitznuten (123) enthält, die so vorgesehen sind, dass die Entlüftungsteile (111) der Vielzahl von Batteriezellen jeweils eingesetzt sind; und
eine erste Klebeschicht (140), die zwischen den Entlüftungsteilen (111) der Batteriezellen (110) und den Sitznuten (123) angeordnet ist und zum Verbinden der Batteriezellen (110) mit dem Zellensitzteil (121) dient, wobei
der Zellensitzteil (121) so vorgesehen ist, dass zwei benachbarte Sitznuten (123) voneinander beabstandet angeordnet sind;
wobei jede Sitznut (123) so vorgesehen ist, dass sie in einer Innenfläche des Zellenrahmens (120) vertieft ist, die dem Entlüftungsteil (111) zugewandt ist;
wobei der Zellensitzteil (121) eine Vielzahl von Entlüftungsmusternuten (125) aufweist, die jeweils auf einer Außenfläche in einer entgegengesetzten Richtung zu einer Innenfläche des Zellenrahmens (120) ausgebildet sind, und
jede der Entlüftungsmusternuten (125) so positioniert ist, dass ein Teilbereich mit der in der entgegengesetzten Richtung befindlichen Sitznut (123) überlappt.

2. Batteriemodul (100) nach Anspruch 1, wobei
die Sitznut (123) eine Sitznut-Bodenfläche (123a) aufweist, die so positioniert ist, dass sie dem Entlüftungsteil (111) zugewandt ist, und eine Sitznut-Seitenfläche (123b), die die Sitznut-Bodenfläche (123a) und eine Innenfläche des Zellenrahmens (120) verbindet, und
die erste Klebeschicht (140) jeweils in einem Raum zwischen der Sitznut-Bodenfläche (123a) und dem Entlüftungsteil (111) und einem Raum zwischen der Sitznut-Seitenfläche (123b) und der Batteriezelle (110) positioniert ist.

3. Batteriemodul (100) nach Anspruch 2, wobei
die erste Klebeschicht (140) durch Aufbringen eines Klebematerials auf eine Innenfläche des Zellenrahmens (120) gebildet wird, die die Sitznut-Bodenfläche (123a) und die Sitznut-Seitenfläche (123b) einschließt.

4. Batteriemodul (100) nach Anspruch 2, wobei
die erste Klebeschicht (140) so vorgesehen ist, dass sie jede der Vielzahl von Sitznuten (123) umgibt.

5. Batteriemodul (100) nach Anspruch 1, wobei
jede Entlüftungsmusternut (125) so angeordnet ist, dass ihr Mittelpunkt koaxial mit dem Mittelpunkt der in der entgegengesetzten Richtung befindlichen Sitznut (123) positioniert ist, und
jede Entlüftungsmusternut (125) einen kleineren Durchmesser als der Durchmesser der Sitznut (123) aufweist.

6. Batteriemodul (100) nach Anspruch 4, wobei
der Zellensitzteil (121) einen Kollisionswandteil (124) aufweist, der zwischen der Sitznut (123) und der Entlüftungsmusternut (125) positioniert ist, und
der Kollisionswandteil (124) einen Bereich mit der geringsten Dicke im Zellenrahmen (120) umfasst.

7. Batteriemodul (100) nach Anspruch 4, wobei
der Kollisionswandteil (124) so vorgesehen ist, dass er beschädigt wird, wenn die in die Sitznut (123) eingesetzte Batteriezelle (110) entzündet wird.

8. Batteriemodul (100) nach Anspruch 4, wobei
die Tiefe der Entlüftungsmusternut (125) kleiner ist als die Tiefe der Sitznut (123).

9. Batteriemodul (100) nach Anspruch 4, wobei
der Zellenrahmen (120) spritzgegossen ist, so dass die Vielzahl von Sitznuten (123) auf einer Innenfläche des Zellenrahmens (120) vorgesehen ist und die Vielzahl von Entlüftungsmusternuten (125) auf einer Außenfläche des Zellenrahmens (120) vorgesehen ist.

10. Batteriemodul (100) nach Anspruch 1, wobei
der Zellensitzteil (121) so vorgesehen ist, dass benachbarte Sitznuten (123) voneinander getrennt sind, und so vorgesehen ist, dass Sitznuten (123), die Batteriezellen (110) umgeben, in denen eine interne Zündung stattgefunden hat, einzeln beschädigt werden.

11. Batteriemodul (100) nach Anspruch 1, ferner umfassend
einen Zellenträgerteil (150), der eine Vielzahl von Einsetzlöchern (151) aufweist, in die jede Batteriezelle (110) eingesetzt ist, und der auf dem Zellenrahmen (120) montiert ist.

12. Batteriemodul (100) nach Anspruch 11, ferner umfassend
einen Abdeckteil (170), der den Zellenträgerteil (150) umgibt und auf dem Zellenrahmen (120) montiert ist, um die Vielzahl von Batteriezellen (110) aufzunehmen.

13. Batteriemodul (100) nach Anspruch 12, ferner umfassend
eine zweite Klebeschicht (160) zum Verbinden der Vielzahl von Batteriezellen (110) mit dem Abdeckteil (170).

## Revendications

1. Module de batterie (100) comprenant :
une pluralité d'éléments de batterie (110) ayant des parties d'évent (111) ;
un cadre d'éléments (120) incluant une partie de logement d'élément (121) ayant une pluralité de rainures de logement (123) prévues de sorte que les parties d'évent (111) de la pluralité d'éléments de batterie soient chacune insérées ; et
une première couche adhésive (140) disposée entre les parties d'évent (111) des éléments de batterie (110) et les rainures de logement (123), et pour lier les éléments de batterie (110) à la partie de logement d'élément (121), dans lequel
la partie de logement d'élément (121) est prévue de sorte que deux rainures de logement (123) adjacentes soient situées à distance l'une de l'autre ;
dans lequel chaque rainure de logement (123) est prévue pour être en retrait dans une surface intérieure du cadre d'éléments (120) faisant face à la partie d'évent (111) ;
dans lequel la partie de logement d'élément (121) a une pluralité de rainures de motif d'évent (125) formées chacune sur une surface extérieure dans une direction opposée à une surface intérieure du cadre d'éléments (120), et
chacune des rainures de motif d'évent (125) est positionnée de sorte qu'une région partielle chevauche la rainure de logement (123) située dans la direction opposée.

2. Le module de batterie (100) selon la revendication 1, dans lequel
la rainure de logement (123) a une surface de fond de rainure de logement (123a) positionnée pour faire face à la partie d'évent (111) et une surface latérale de rainure de logement (123b) reliant la surface de fond de rainure de logement (123a) et une surface intérieure du cadre d'éléments (120), et
la première couche adhésive (140) est positionnée dans chacun d'un espace entre la surface de fond de rainure de logement (123a) et la partie d'évent (111) et d'un espace entre la surface latérale de rainure de logement (123b) et l'élément de batterie (110).

3. Le module de batterie (100) selon la revendication 2, dans lequel
la première couche adhésive (140) est formée en appliquant un matériau adhésif sur une surface intérieure du cadre d'éléments (120) incluant la surface de fond de rainure de logement (123a) et la surface latérale de rainure de logement (123b).

4. Le module de batterie (100) selon la revendication 2, dans lequel
la première couche adhésive (140) est prévue pour entourer chacune de la pluralité de rainures de logement (123).

5. Le module de batterie (100) selon la revendication 1, dans lequel
chaque rainure de motif d'évent (125) est agencée de sorte que son centre soit positionné coaxialement avec le centre de la rainure de logement (123) située dans la direction opposée, et
chaque rainure de motif d'évent (125) a un diamètre plus petit que le diamètre de la rainure de logement (123).

6. Le module de batterie (100) selon la revendication 4, dans lequel
la partie de logement d'élément (121) a une partie de paroi de collision (124) positionnée entre la rainure de logement (123) et la rainure de motif d'évent (125), et
la partie de paroi de collision (124) comprend une région avec la plus petite épaisseur dans le cadre d'éléments (120).

7. Le module de batterie (100) selon la revendication 4, dans lequel
la partie de paroi de collision (124) est prévue pour être endommagée lorsque l'élément de batterie (110) inséré dans la rainure de logement (123) est enflammé.

8. Le module de batterie (100) selon la revendication 4, dans lequel
la profondeur de la rainure de motif d'évent (125) est plus petite que la profondeur de la rainure de logement (123).

9. Le module de batterie (100) selon la revendication 4, dans lequel
le cadre d'éléments (120) est moulé par injection de telle sorte que la pluralité de rainures de logement (123) est prévue sur une surface intérieure du cadre d'éléments (120) et la pluralité de rainures de motif d'évent (125) est prévue sur une surface extérieure du cadre d'éléments (120).

10. Le module de batterie (100) selon la revendication 1, dans lequel
la partie de logement d'élément (121) est prévue de sorte que des rainures de logement (123) adjacentes soient séparées les unes des autres, et prévue de sorte que des rainures de logement (123) entourant des éléments de batterie (110) dans lesquels un allumage interne s'est produit soient endommagées individuellement.

11. Le module de batterie (100) selon la revendication 1, comprenant en outre
une partie de support d'élément (150) ayant une pluralité de trous d'insertion (151) dans lesquels chaque élément de batterie (110) est inséré, et montée sur le cadre d'éléments (120).

12. Le module de batterie (100) selon la revendication 11, comprenant en outre
une partie de couvercle (170) entourant la partie de support d'élément (150) et montée sur le cadre d'éléments (120) pour recevoir la pluralité d'éléments de batterie (110).

13. Le module de batterie (100) selon la revendication 12, comprenant en outre
une seconde couche adhésive (160) pour lier la pluralité d'éléments de batterie (110) à la partie de couvercle (170).
